(19) Europäisches Patentamt
European Patent Office
Office européen des brevets

(11)   **EP 1 867 857 B1**

(12)   **EUROPEAN PATENT SPECIFICATION**

(45) Date of publication and mention
of the grant of the patent:
**24.12.2008   Bulletin 2008/52**

(51) Int Cl.:
***F02D 41/40*** *(2006.01)*

(21) Application number: **07011071.3**

(22) Date of filing: **05.06.2007**

(54) **Fuel injection control system for internal combustion engine**

System zur Steuerung der Kraftstoffeinspritzung für einen Verbrennungsmotor

Appareil de contrôle d'injection de carburant pour moteur à combustion interne

(84) Designated Contracting States:
**DE GB**

(30) Priority:   **15.06.2006   JP 2006165603**

(43) Date of publication of application:
**19.12.2007   Bulletin 2007/51**

(73) Proprietor: **HONDA MOTOR CO., LTD.
Tokyo 107-8556 (JP)**

(72) Inventors:
• **Ueda, Hirofumi
Wako-shi, Saitama (JP)**
• **Endo, Masatoshi
Wako-shi, Saitama (JP)**
• **Okayasu, Kouji
Wako-shi, Saitama (JP)**
• **Kaneko, Isao
Wako-shi, Saitama (JP)**

(74) Representative: **Trossin, Hans-Jürgen et al
Weickmann & Weickmann,
Postfach 860 820
81635 München (DE)**

(56) References cited:
**EP-A2- 0 812 981        EP-A2- 0 980 973
EP-A2- 1 070 839**

**EP 1 867 857 B1**

**Description**

BACKGROUND OF THE INVENTION

Field of the Invention

The present invention relates to a fuel injection control system for an internal combustion engine, and particularly to a control system for performing a pilot fuel injection before a main fuel injection.

Description of the Related Art

Japanese Patent Laid-open No. H09-228880 (JP-'880) discloses a fuel injection control system for a diesel engine. According to this system, an intake air amount is detected and a basic fuel injection amount, a basic injection timing, a basic pilot injection amount, a basic pilot injection timing, and a target intake air amount are calculated according to the detected intake air amount, an engine rotational- speed, an accelerator opening, and the like. When the detected intake air amount is less than the target intake air amount, and the basic -pilot injection amount is corrected in an increasing direction, the basic pilot injection timing is corrected in an advancing direction.
According to the control method shown in JP-'880, the pilot injection amount and the pilot injection timing are corrected according to a deviation between the target intake air amount and the actual intake air amount. Accordingly, an intake air amount sensor for detecting the intake air amount (or an intake pressure sensor) is necessary. Therefore, accurate control cannot be performed if a failure of the sensor occurs or the sensing characteristic of the sensor has deteriorated.
EP 0 812 981 A on which the preamble of claim 1 is based describes a method and a device for controlling the transient-state pilot fuel injection in a compression ignition engine. According to this method, during transient operation the timing and duration of the pilot injection are corrected ($A_c$, $D_c$) with respect to the values for steady-state operation of the engine. This correction takes into account the amount of change of the fuel quantity to be injected due to the transient, at least indirectly through the updated target value of the injection pressure ($P_{MAP}$).
EP 1 070 839 A and EP 0 980 973 A propose methods for correction of the pilot injection variables to take into account transient operation of the engine: the change in fuel quantity to be injected, also by reference to the target fuel injection quantity, is considered for the calculation of transient correction.

SUMMARY OF THE INVENTION

The present invention was made contemplating the above-described point, and an object of the present invention is to provide a fuel injection control system for an internal combustion engine, which can reduce the combustion noise during acceleration of the engine with a minimal use of the sensors for detecting an engine operating condition.
In order to attain the above object, the present invention provides a fuel injection control system for an internal combustion engine (1) having at least one fuel injection valve (16) for injecting fuel to a combustion chamber of the internal combustion engine (1) in accordance with claim 1 and a corresponding method in accordance with claim 2. The fuel injection control system comprises fuel injection amount calculating means for calculating a fuel injection amount (QINJ) according to a rotational speed (NE) of the engine and a load (AP) on the engine, main injection means for performing a main injection according to the fuel injection amount (QINJ), and pilot injection means for performing a pilot injection before the main injection according to the fuel injection amount (QINJ). The fuel injection control system is characterized by including transient control means for controlling at least one of a pilot injection fuel amount (QIP) and a pilot injection timing (CAIP) according to a change amount (DQ) of the fuel injection amount.
With this configuration, at least one of the pilot injection fuel amount and the pilot injection timing is controlled according to the change amount of the fuel injection amount. That is, an accelerating condition of the engine is detected by the change amount of the fuel injection amount, and the pilot injection fuel amount and/or the pilot injection timing are controlled according to the detected condition. Therefore, the combustion noise during acceleration can be suppressed without using an intake air amount sensor or the like.
As below the first value (DQ1), i.e. at low fuel injection change amounts (DQ), no correction is carried out, an unnecessary correction is avoided so that a fuel consumption may be reduced. On the other hand, beyond the second value (DQ2), the correction is not further increased so that an excessive correction is avoided to reduce the engine noise and to reduce the fuel consumption, too.
Further, as the correction coefficient (KACC) is used for both the correction of the pilot injection fuel amount and the pilot injection timing, the calculating amount will be reduced. In EP 0 812 981 A, a respective advance correction value Ac and another duration correction value Dc have to be calculated for the correction process.
The transient control means increases the pilot injection fuel amount (QIP) as the change amount (DQ) of the fuel injection amount increases.

With this configuration, the pilot injection fuel amount increases and the main injection amount decreases as the change amount of the fuel injection amount increases, thereby suppressing combustion noise.

The transient control means advances the pilot injection timing (CAIP) as the change amount (DQ) of the fuel injection amount increases.

With this configuration, the pilot injection timing advances and the combustion starts earlier as the change amount of the fuel injection amount increases, thereby suppressing combustion noise.

BRIEF DESCRIPTION OF THE DRAWINGS

FIG. 1 shows a configuration of an internal combustion engine and a control system therefor according to one embodiment of the present invention;

FIG. 2 is a flowchart of a process for performing the fuel injection control;

FIGS. 3A - 3E show maps and a table which are referred to in the process of FIG. 2; and

FIGS. 4A and 4B are time charts for illustrating the process of FIG. 2.

DETAILED DESCRIPTION OF THE PREFERRED EMBODIMENTS

Preferred embodiments of the present invention will now be described with reference to the drawings.

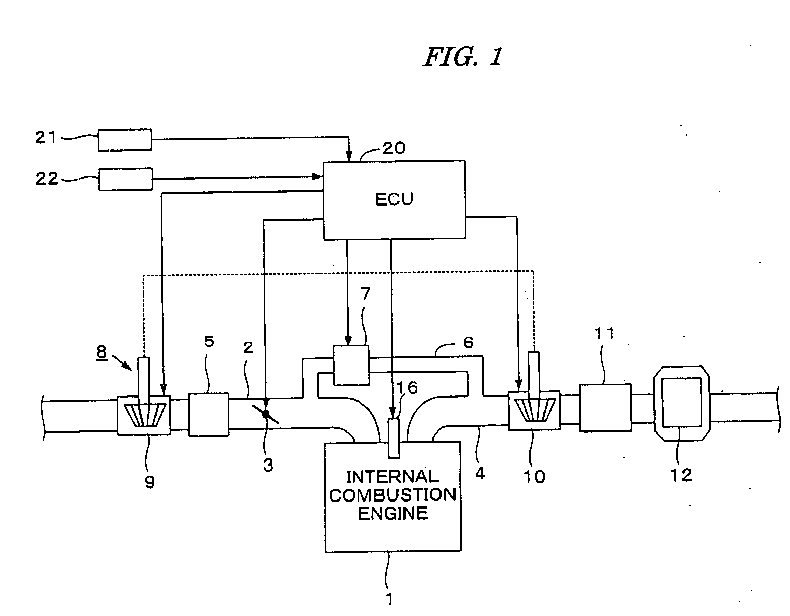

FIG. 1 is a schematic diagram showing a configuration of an internal combustion engine and a control system therefor according to one embodiment of the present invention. The internal combustion engine 1 (hereinafter referred to as "engine") is a diesel engine wherein fuel is injected directly to cylinders, and each cylinder is provided with a fuel injection valve 16. The fuel injection valve 16 is electrically connected to an electronic control unit (hereinafter referred to as "ECU") 20. The ECU 20 controls a valve opening period and a valve opening timing (the fuel injection period and fuel injection timing) of the fuel injection valve 16.

The engine 1 has an intake pipe 2, an exhaust pipe 4, and a turbocharger 8. The turbocharger 8 includes a turbine 10 and a compressor 9. The turbine 10 is driven by the kinetic energy of exhaust gases. The compressor 9, which is rotationally driven by the turbine 10, compresses the intake air of the engine 1.

The turbine 10 has a plurality of movable vanes (not shown), and is configured so that the rotational speed of the turbine 10 is adjusted by changing an opening of the movable vanes. The opening of the vanes in the turbine 10 is electro-magnetically controlled by the ECU 20.

The intake pipe 2 is provided with an intercooler 5 on the downstream side of the compressor 9 for cooling pressurized air and an intake shutter (throttle valve) 3 for controlling the intake air amount. The intake shutter 3 is controlled to be opened/closed by the ECU 20 through an actuator not shown.

An exhaust gas. recirculation passage 6 for recirculating exhaust gases to the intake pipe 2 is provided between the upstream side of the turbine 10 in the exhaust pipe 4 and the downstream side of the intake shutter 3 in the intake pipe 2. The exhaust gas recirculation passage 6 is provided with an exhaust gas recirculation control valve 7 (hereinafter referred to as "EGR valve") that controls the amount of exhaust gases that are recirculated. The EGR valve 7 is an electromagnetic valve having a solenoid. A valve opening of the EGR valve 27 is controlled by the ECU 20.

The exhaust pipe 4 is provided with a catalytic converter 11 for purifying the exhaust gases. and a diesel particulate filter (DPF) 12 in this order from the upstream side. The catalytic converter 11 and the DPF 12 are disposed downstream of the turbine 10.

The catalytic converter 11 contains an oxidation catalyst for accelerating oxidation of hydrocarbon and carbon monoxide in the exhaust gases. Further, the catalytic converter may include a NOx adsorbent and a catalyst for reducing NOx.

The DPF 12 traps soot which consists of particulates whose main component is carbon (C) in the exhaust gases, when the exhaust gases pass through small holes in the filter wall. Specifically, the inflowing soot is accumulated on the surface of the filter wall and in the small hole in the filter wall. For example, ceramics such as silicon carbide (SiC) or porous material is used as materials for the filter wall.

Further, a crank angle position sensor 21, an accelerator sensor 22, a coolant temperature sensor (not shown), and the like are provided. The crank angle position sensor 21 detects a rotation angle of a crankshaft of the engine 1, the accelerator sensor 22 detects an operation amount AP of an accelerator pedal of the vehicle driven by the engine 1, and the coolant temperature sensor detects a coolant temperature of the engine 1. The detection signals of these sensors are supplied to the ECU 20.

The crank angle position sensor 21 includes a cylinder discrimination sensor which outputs a pulse (hereinafter referred to as CYL pulse) at a predetermined crank angle position for a specific cylinder of the engine 1. The crank angle position sensor 21 also includes a TDC sensor which outputs a TDC pulse at a crank angle position of a predetermined crank angle before a top dead center (TDC) starting an intake stroke in each cylinder (i.e., at every 180 deg crank angle in the case of a four-cylinder engine) and a CRK sensor for generating one pulse (hereinafter referred to as CRK pulse) with a constant crank angle period (e.g., a period of 30 deg) shorter than the period of generation of the TDC pulse. The CYL pulse, the TDC pulse and the CRK pulse are supplied to the ECU 20. These pulses are used to control a fuel injection timing and to detect an engine rotational speed NE.

The ECU 20 includes an input circuit, a central processing unit (hereinafter referred to as CPU), a memory circuit, and an output circuit. The input circuit performs numerous functions, including shaping the waveforms of input signals from the various sensors, correcting the voltage levels of the input signals to a predetermined level, and converting analog signal values into digital signal values. The memory circuit preliminarily stores- various operating programs to be executed by the CPU and stores the results of computations and the like by the CPU. The output circuit supplies control signals to the fuel injection valves 16, the EGR valve 7 and the like.

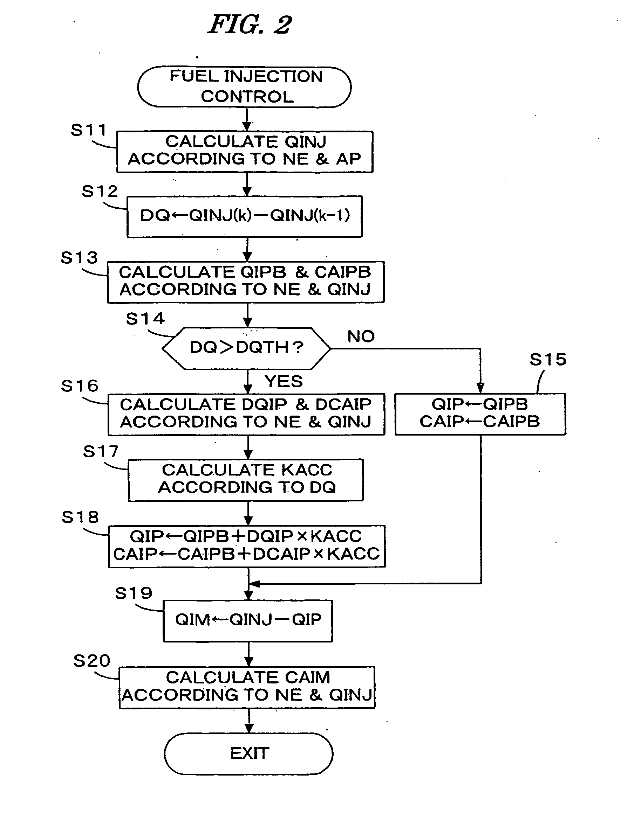

FIG. 2 is a flowchart of a process for controlling fuel injection by the fuel injection valve 16. This process is executed by the CPU in the ECU 20 at predetermined time intervals.

In step S11, a fuel injection amount QINJ is calculated according to the engine rotational speed NE and the accelerator pedal operation amount AP. The fuel injection amount QINJ is set so as to be substantially proportional to the accelerator pedal operation amount AP.

In step S12, a change amount DQ of the fuel injection amount QINJ is calculated by the following equation (1). In the equation (1), k is a discrete time digitized with the execution period of this process.

$$DQ = QINJ(k) - QINJ(k - 1) \qquad (1)$$

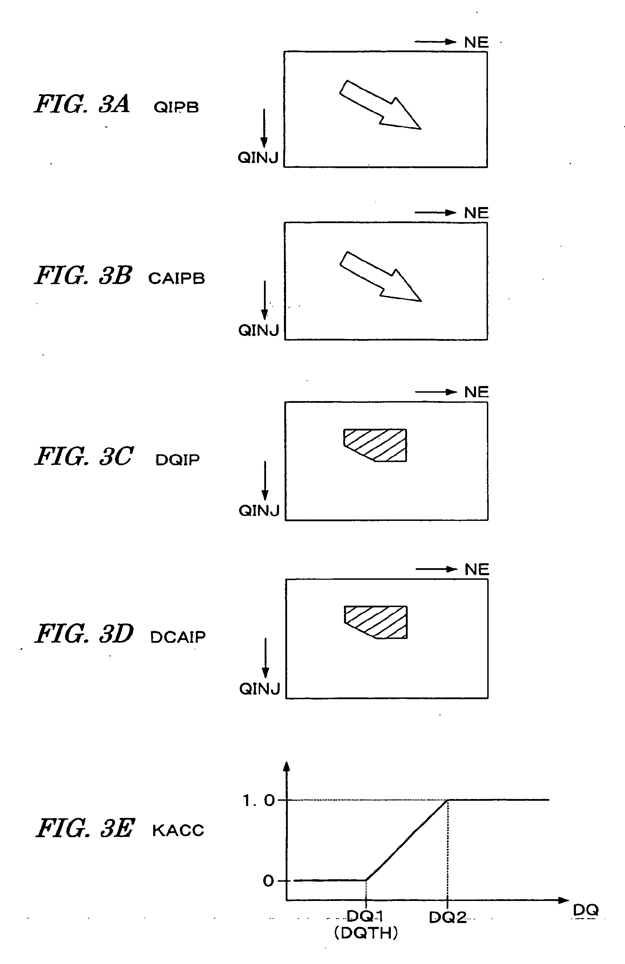

In step S13, a QIPB map shown in FIG. 3A is retrieved according to the engine rotational speed NE and the fuel injection amount QINJ, to calculate a basic pilot injection amount QIPB, and a CAIPB map shown in FIG. 3B is retrieved to calculate a basic pilot injection timing CAIPB. The QIPB map is set so that the basic pilot injection amount QIPB increases as the engine rotational speed NE increases and/or the fuel injection amount QINJ increases. The CAIPB map is set so the basic pilot injection timing CAIPB advances as the engine rotational speed NE increases and/or the fuel injection amount QINJ increases.

In step S14, it is determined whether or not the change amount DQ is greater than a determination threshold value DQTH. If the answer to step S14 is negative (NO), the pilot injection amount QIP is set to the basic pilot injection amount QIPB, and the pilot injection timing CAIP is set to the basic pilot injection timing CAIPB (step S15). Thereafter, the process proceeds to step S19.

If DQ is greater than DQTH in step S14, which indicates that the engine 1 is in a predetermined accelerating condition, the basic pilot injection amount QIPB and the basic pilot injection timing CAIPB are corrected in steps S16 to S18 to calculate the pilot injection amount QIP and the pilot injection timing CAIP.

In step S16, a DQIP map shown in FIG. 3C and a DCAIP map shown in FIG. 3D are retrieved according to the engine rotational speed NE and the fuel injection amount QINJ to calculate a pilot injection amount correction value DQIP and a pilot injection timing correction value DCAIP. In the DQIP map, the correction value DQIP is set, for example, to a value corresponding to about 30 to 40% of the basic pilot injection amount QIPB in the operating region with hatching shown in FIG. 3C, and set to "0" in the operating region without hatching. In the DCAIP map, the correction value DCAIP is set, for example, to 2 degrees in the operating region with hatching shown in FIG. 3D, and set to "0" in the operating region without hatching.

In step S17, a KACC table shown in FIG. 3E is retrieved according to the change amount DQ to calculate a correction coefficient KACC. The KACC table is set in the range from a first value DQ1 which corresponds to the determination threshold value DQTH to a second value DQ2, so that the correction coefficient KACC increases as the change amount DQ increases. Further, in the KACC table, the correction coefficient KACC is set to "0" in the range where the change amount DQ is less than the first value DQ1, and the correction coefficient KACC is set to "1.0" in the range where the change amount DQ is greater than the second value DQ2.

In step S18, the basic pilot injection amount QIPB, the pilot injection amount correction value DQIP, and the correction coefficient KACC are applied to the following equation (2), to calculate the pilot injection amount QIP. Further, the basic pilot injection timing CAIPB, the pilot injection timing correction value DCAIP, and the correction coefficient KACC are applied to the following equation (3), to calculate the pilot injection timing CAIP.

$$QIP = QIPB + DQIP \times KACC \qquad (2)$$

$$CAIP = CAIPB + DCAIP \times KACC \qquad (3)$$

In step S19, the fuel injection amount QINJ and the pilot injection amount QIP are applied to the following equation (4), to calculate a main injection amount QIM.

$$QIM = QINJ - QIP \qquad (4)$$

In step S20, a main injection timing CAIM is calculated according to the engine rotational speed NE and the fuel injection amount QINJ.

The ECU 20 supplies a drive signal to the fuel injection valve 16 according to the pilot injection amount QIP, the pilot injection timing CAIP, the main injection amount QIM, and the main injection timing CAIM which are calculated in the process of FIG. 2, and performs the fuel injection.

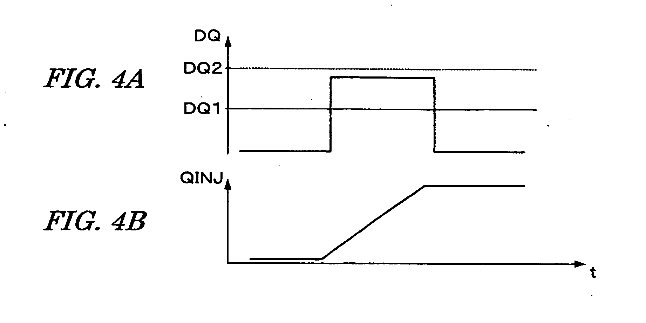

In this embodiment, when the accelerator is depressed, the fuel injection amount QINJ increases, as shown in FIG. 4B, substantially proportional to the accelerator pedal operation amount AP, and the change amount DQ exceeds the first value DQ1 (determination threshold value DQTH) as shown in FIG. 4A. Accordingly, steps S16 to S18 of FIG. 2 are executed to perform the correction of the pilot injection amount QIP in an increasing direction (correction of the main injection amount QIM in a decreasing direction) and the correction of the pilot injection timing CAIP in an advancing direction. Specifically, the correction coefficient KACC is set to a greater value as the change amount DQ becomes greater, and an increment value of the injection amount and an advancing amount of the injection timing are controlled to be increased. According to this control, the combustion noise during acceleration can be reduced by about 20%.

As described above, in this embodiment, the predetermined accelerating operating condition of the engine 1, wherein the control for reducing combustion noise should be performed, is determined according to the change amount DQ of the fuel injection amount QINJ. In the predetermined accelerating operating condition (DQ > DQTH), the correction of the pilot injection amount in the increasing direction and the correction of the pilot injection timing in the advancing direction are performed. Therefore, without using the intake air amount sensor or the like, the combustion noise during acceleration can be reduced.

In this embodiment, the ECU 20 constitutes the fuel injection amount calculating means, a part of the main injection means, a part of the pilot injection means, and the transient control means. Specifically, step S11 of FIG. 2 corresponds to the fuel injection amount calculating means, steps S19 and S20 correspond to the part of the main injection means, step S13 corresponds to the part of the pilot injection means, and steps S12, S14, and S16 to S18 correspond to the transient control means.

The present invention is not limited to the embodiment described above, and various modifications may be made. For example, in the above-described embodiment, when the change amount DQ of the fuel injection amount QINJ exceeds the determination threshold value DQTH, both of the correction of the pilot injection amount in the increase direction and the correction of the pilot injection timing in the advancing direction are performed. Alternatively, only one of the pilot injection amount correction and the pilot injection timing correction may be performed. Even in such a case, the combustion noise during acceleration can be reduced by about 10%.

Further, in the above-described embodiment, the correction value DQIP in the region with hatching shown in FIG. 3C is set to a constant value. Alternatively, the correction value DQIP may be set to a greater value as the engine rotational speed NE increases and/or the fuel injection amount QINJ increases in the region with hatching. Similarly, the correction value DCAIP may be set to a greater value (a more advanced value) as the engine rotational speed NE increases and/or the fuel injection amount QINJ increases in the region with hatching shown in FIG. 3D.

The present invention can be applied to watercraft propulsion engine such as an outboard engine having a vertically extending crankshaft.

A fuel injection control system for an internal combustion engine having at least one fuel injection valve for injecting fuel to a combustion chamber of the internal combustion engine is disclosed. According to the fuel injection control system, a fuel injection amount is calculated according to a rotational speed of the engine and a load on the engine, a main injection is performed according to the fuel injection amount, and a pilot injection before the main injection according to the fuel injection amount. Further, at least one of a pilot injection fuel amount and a pilot injection timing is controlled according to a change amount of the fuel injection amount.

## Claims

1. A fuel injection control system for an internal combustion engine (1) having at least one fuel injection valve (16) for injecting fuel to a combustion chamber of said engine, said fuel injection control system comprising:

fuel injection amount calculating means for calculating a fuel injection amount (QINJ) according to a rotational speed (NE) of said engine and a load (AP) on said engine;

main injection means for performing a main injection according to the fuel injection amount (QINJ); and

pilot injection means for performing a pilot injection before the main injection according to the fuel injection amount (QINJ);

wherein said fuel injection control system further comprises transient control means for correcting a pilot injection fuel amount (QIP) and a pilot injection timing (CAIP) according to a change amount (DQ) of the fuel injection amount (QINJ),

**characterized in that** said transient control means corrects the pilot injection fuel amount (QIP) and the pilot injection timing (CAIP) by a correction coefficient (KACC) which is zero below a first value (DQ1) of the fuel injection change amount (DQ), and which increases from the first value (DQ1) up to a second value (DQ2) of the fuel injection change amount (DQ) which is greater than the first value (DQ1) to increase the pilot injection fuel amount (QIP) and to advance the pilot injection timing (CAIP) as the fuel injection change amount (DQ) increases, and which is set to 1.0 if the fuel injection change amount (DQ) exceeds the second value (DQ2).

2. A fuel injection control method for an internal combustion engine (1) having at least one fuel injection valve (16) for injecting fuel to a combustion chamber of said engine, said fuel injection control method comprising the steps of:

a) calculating a fuel injection amount (QINJ) according to a rotational speed (NE) of said engine and a load (AP) on said engine;

b) performing a main injection according to the fuel injection amount (QINJ); and

c) performing a pilot injection before the main injection according to the fuel injection amount (QINJ);

wherein said fuel injection control method further includes the step d) of correcting a pilot injection fuel amount (QIP) and a pilot injection timing (CAIP) according to a change amount (DQ) of the fuel injection amount (QINJ),

**characterized in that** said transient control means corrects the pilot injection fuel amount (QIP) and the pilot injection timing (CAIP) by a correction coefficient (KACC) which is zero below a first value (DQ1) of the fuel injection change amount (DQ), and which increases from the first value (DQ1) up to a second value (DQ2) of the fuel injection change amount (DQ) which is greater than the first value (DQ1) to increase the pilot injection fuel amount (QIP) and to advance the pilot injection timing (CAIP) as the fuel injection change amount (DQ) increases, and which is set to 1.0 if the fuel injection change amount (DQ) exceeds the second value (DQ2).

## Patentansprüche

1. Kraftstoffeinspritz-Steuerungs-/Regelungssystem für eine Brennkraftmaschine (1), die zumindest ein Kraftstoffeinspritzventil (16) zum Einspritzen von Kraftstoff zu einer Brennkammer der Maschine aufweist,

wobei das Kraftstoffeinspritz-Steuerungs-/Regelungssystem umfasst: ein Kraftstoffeinspritzmengen-Berechnungsmittel zum Berechnen einer Kraftstoffeinspritzmenge (QINJ) gemäß einer Drehzahl (NE) der Maschine und einer Last (AP) an der Maschine;

ein Haupteinspritzmittel zur Durchführung einer Haupteinspritzung gemäß der Kraftstoffeinspritzmenge (QINJ); und

ein Piloteinspritzmittel zur Durchführung einer Piloteinspritzung vor der Haupteinspritzung gemäß der Kraftstoffeinspritzmenge (QINJ);

wobei das Kraftstoffeinspritz-Steuerungs-/Regelungssystem ferner ein Übergangs-Steuerungs-/Regelungsmittel aufweist, um eine Piloteinspritzkraftstoffmenge (QIP) und eine Piloteinspritzzeitgebung (CAIP) gemäß einer Änderungsmenge (DQ) der Kraftstoffeinspritzmenge (QINJ) zu korrigieren,

**dadurch gekennzeichnet, dass** das Übergangs-Steuerungs-/Regelungsmittel die Piloteinspritzkraftstoffmenge (QIP) und die Piloteinspritzzeitgebung (CAIP) mit einem Korrekturkoeffizient (KACC) korrigiert, welcher unterhalb eines ersten Werts (DQ1) der Kraftstoffeinspritzänderungsmenge (DQ) Null ist, und welcher von dem ersten Wert (DQ1) bis zu einem zweiten Wert (DQ2) der Kraftstoffeinspritzänderungsmenge (DQ), der größer als der erste Wert (DQ1) ist, zunimmt, um die Piloteinspritzkraftstoffmenge (QIP) zu erhöhen und um die Piloteinspritzzeitgebung (CAIP) vorzuverlagern, wenn die Kraftstoffeinspritzänderungsmenge (DQ) zunimmt, und welcher auf 1,0 gesetzt wird, wenn die Kraftstoffeinspritzänderungsmenge (DQ) den zweiten Wert (DQ2) überschreitet.

2. Kraftstoffeinspritz-Steuerungs-/Regelungsverfahren für eine Brennkraftmaschine (1), die zumindest ein Kraftstoffeinspritzventil (16) zum Einspritzen von Kraftstoff zu einer Brennkammer der Maschine aufweist, wobei das Kraftstoffeinspritz-Steuerungs-/Regelungsverfahren die Schritte umfasst:

a) Berechnen einer Kraftstoffeinspritzmenge (QINJ) gemäß einer Drehzahl (NE) der Maschine und einer Last (AP) an der Maschine;
b) Durchführen einer Haupteinspritzung gemäß der Kraftstoffeinspritzmenge (QINJ); und
c) Durchführen einer Piloteinspritzung vor der Haupteinspritzung gemäß der Kraftstoffeinspritzmenge (QINJ);

worin das Kraftstoffeinspritz-Steuerungs-/Regelungsverfahren ferner den Schritt d) umfasst, eine Pilotkraftstoffspritzmenge (QIP) und eine Piloteinspritzzeitgebung (CAIP) gemäß einer Änderungsmenge (DQ) der Kraftstoffspritzmenge (QINJ) zu korrigieren,
**dadurch gekennzeichnet, dass** das Übergangs-Steuerungs-/Regelungsmittel die Piloteinspritzkraftstoffmenge (QIP) und die Piloteinspritzzeitgebung (CAIP) mit einem Korrekturkoeffizient (KACC) korrigiert, welcher unterhalb eines ersten Werts (DQ1) der Kraftstoffeinspritzänderungsmenge (DQ) Null ist, und welcher von dem ersten Wert (DQ1) bis zu einem zweiten Wert (DQ2) der Kraftstoffeinspritzänderungsmenge (DQ), der größer als der erste Wert (DQ1) ist, zunimmt, um die Piloteinspritzkraftstoffmenge (QIP) zu erhöhen und um die Piloteinspritzzeitgebung (CAIP) vorzuverlagern, wenn die Kraftstoffeinspritzänderungsmenge (DQ) zunimmt, und welcher auf 1,0 gesetzt wird, wenn die Kraftstoffeinspritzänderungsmenge (DQ) den zweiten Wert (DQ2) überschreitet.

## Revendications

1. Système de contrôle d'injection de carburant pour un moteur à combustion interne (1) comprenant au moins une soupape d'injection de carburant (16) pour injecter du carburant dans une chambre de combustion dudit moteur, ledit système de contrôle d'injection de carburant comprenant :

des moyens de calcul d'une quantité d'injection de carburant pour calculer une quantité d'injection de carburant (QINJ) en accord avec une vitesse de rotation (NE) dudit moteur et une charge (AP) sur ledit moteur ;
des moyens d'injection principale pour exécuter une injection principale en accord avec la quantité d'injection de carburant (QINJ) ; et
des moyens d'injection pilote pour exécuter une injection pilote avant l'injection principale, en accord avec la quantité d'injection de carburant (QINJ) ;
dans lequel ledit système de contrôle d'injection de carburant comprend par ailleurs des moyens de contrôle transitoire pour corriger une quantité de carburant d'injection pilote (QIP) et un calage de l'injection pilote (CAIP) en accord avec une quantité de changement (DQ) de la quantité d'injection de carburant (QINJ),
**caractérisé en ce que** lesdits moyens de contrôle transitoire corrigent la quantité de carburant injection pilote (QIP) et le calage de l'injection pilote (CAIP) par un coefficient de correction (KACC) qui est égal à zéro en dessous d'une première valeur (DQ1) de la quantité de changement d'injection de carburant (DQ), et qui augmente depuis la première valeur (DQ1) jusqu'à une seconde valeur (DQ2) de la quantité de changement d'injection de carburant (DQ) qui est supérieure à la première valeur (DQ1) de façon à augmenter la quantité de carburant d'injection pilote (QIP) et à faire avancer le calage d'injection pilote (CAIP) lorsque la quantité de changement d'injection de carburant (DQ) augmente, et qui est défini à la valeur de 1,0 si la quantité de changement d'injection de carburant (DQ) dépasse la seconde valeur (DQ2).

2. Procédé de contrôle d'injection de carburant pour un moteur à combustion interne (1) comprenant au moins une soupape d'injection de carburant (16) pour injecter du carburant dans une chambre de combustion dudit moteur, ledit procédé de contrôle d'injection de carburant comprenant les étapes consistant à :

a) calculer une quantité d'injection de carburant (QINJ) en accord avec une vitesse de rotation (NE) dudit moteur et une charge (AP) sur ledit moteur ;
b) exécuter une injection principale en accord avec la quantité d'injection de carburant (QINJ) ; et
c) exécuter une injection pilote avant l'injection principale, en accord avec la quantité d'injection de carburant (QINJ) ;

dans lequel ledit procédé de contrôle d'injection de carburant comprend par ailleurs l'étape d) consistant à corriger une quantité de carburant d'injection pilote (QIP) et un calage de l'injection pilote (CAIP) en accord avec une quantité de changement (DQ) de la quantité d'injection de carburant (QINJ),

**caractérisé en ce que** lesdits moyens de contrôle transitoire corrigent la quantité de carburant injection pilote (QIP) et le calage de l'injection pilote (CAIP) par un coefficient de correction (KACC) qui est égal à zéro en dessous d'une première valeur (DQ1) de la quantité de changement d'injection de carburant (DQ), et qui augmente depuis la première valeur (DQ1) jusqu'à une seconde valeur (DQ2) de la quantité de changement d'injection de carburant (DQ) qui est supérieure à la première valeur (DQ1) de façon à augmenter la quantité de carburant d'injection pilote (QIP) et à faire avancer le calage d'injection pilote (CAIP) lorsque la quantité de changement d'injection de carburant (DQ) augmente, et qui est défini à la valeur de 1,0 si la quantité de changement d'injection de carburant (DQ) dépasse la seconde valeur (DQ2).

## FIG. 1

## *FIG. 2*

```
        ┌─────────────────────┐
        │   FUEL INJECTION    │
        │      CONTROL        │
        └─────────────────────┘
                   │
 S11    ┌─────────────────────┐
        │  CALCULATE QINJ     │
        │  ACCORDING TO NE & AP│
        └─────────────────────┘
                   │
 S12    ┌─────────────────────┐
        │  DQ←QINJ(k)−QINJ(k−1)│
        └─────────────────────┘
                   │
 S13    ┌─────────────────────┐
        │  CALCULATE QIPB & CAIPB│
        │  ACCORDING TO NE & QINJ│
        └─────────────────────┘
                   │
 S14      ╱─────────────╲        NO
        ╱   DQ>DQTH ?    ╲──────────────┐
        ╲               ╱               │
          ╲───────────╱                 │
               │ YES                    │
 S16    ┌─────────────────────┐   S15 ┌──────────────┐
        │ CALCULATE DQIP & DCAIP│     │ QIP←QIPB     │
        │ ACCORDING TO NE & QINJ│     │ CAIP←CAIPB   │
        └─────────────────────┘      └──────────────┘
                   │                        │
 S17    ┌─────────────────────┐             │
        │  CALCULATE KACC     │             │
        │  ACCORDING TO DQ    │             │
        └─────────────────────┘             │
                   │                        │
 S18    ┌─────────────────────┐             │
        │ QIP←QIPB+DQIP×KACC   │             │
        │ CAIP←CAIPB+DCAIP×KACC│             │
        └─────────────────────┘             │
                   │◄───────────────────────┘
 S19    ┌─────────────────────┐
        │  QIM←QINJ−QIP       │
        └─────────────────────┘
                   │
 S20    ┌─────────────────────┐
        │  CALCULATE CAIM     │
        │  ACCORDING TO NE & QINJ│
        └─────────────────────┘
                   │
        ┌─────────────────────┐
        │        EXIT         │
        └─────────────────────┘
```

*FIG. 3A* QIPB

*FIG. 3B* CAIPB

*FIG. 3C* DQIP

*FIG. 3D* DCAIP

*FIG. 3E* KACC

*FIG. 4A*

*FIG. 4B*

**EP 1 867 857 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09228880 A
- EP 0812981 A
- EP 1070839 A
- EP 0980973 A